# EUROPEAN PATENT SPECIFICATION

(11) **EP 2 990 329 B1**
(45) Date of publication and mention of the grant of the patent: **07.03.2018**
(21) Application number: 14182910.1
(22) Date of filing: 29.08.2014
(51) Int. Cl.: B64C 1/14

(54) **Aircraft having an aircraft door arrangement**
Flugzeug mit einer Flugzeugtüranordnung
Aéronef comportant un arrangement de porte d'aéronef

(43) Date of publication of application: 02.03.2016
(73) Proprietor: Airbus Operations GmbH, 21129 Hamburg (DE)
(72) Inventor: Paul, Carsten, 21129 Hamburg (DE); Homann, Holger, 21129 Hamburg (DE)
(74) Representative: LKGLOBAL Lorenz & Kopf PartG mbB Patentanwälte

(56) References cited:
- EP-A2- 2 586 699
- US-A- 3 647 169
- US-A1- 2008 093 504
- US-B1- 6 736 353

## Description

### TECHNICAL FIELD

The invention relates to an aircraft having a fuselage including a door arrangement.

### BACKGROUND OF THE INVENTION

In aircraft design, cover plates for covering a gap in a top region of an aircraft door are used. The cover plate provides an aerodynamically advantageous lining of the gap and furthermore provides a water deflection function. However, in some conditions, an oscillation leading to a fluttering or wobbling motion of at least a part of the cover plate may be induced through the airflow passing the cover plate. Besides producing noise, this may also lead to mechanical stress on the cover plate.

The noise produced by a fluttering cover plate may be amplified by the hollow space in the gap above the aircraft door, which is delimited by the door frame, an upper delimitation of an access opening for accessing the aircraft fuselage and the aircraft door having a door seal. However, the gap above the aircraft door may not simply be eliminated, as it is required for or supporting the opening and closing motion of the aircraft door.

US 6,736,353 discloses a grooved profile for diverting liquid above a door of an aircraft.

US 3,647,169 discloses an aircraft door having a locking panel above an upper horizontal edge of a main door, which, when the door is closed, fills the space between the upper edge of the main door and the fuselage opening.

### SUMMARY OF THE INVENTION

Consequently, it may be an object of the invention to provide an aircraft having a door arrangement, which leads to a clearly reduced fluttering motion of a cover plate and reduced noise emission as well as less mechanical stresses on the cover plate.

The object is met by an aircraft having the features of independent claim 1. Advantageous embodiments and further improvements may be gathered from the sub-claims and the following description.

An aircraft having a fuselage including an aircraft door arrangement is proposed, the arrangement comprising an access opening in an aircraft fuselage, at least a section of a door frame arranged in the access opening, an aircraft door, a cover plate extending from an outer edge of the aircraft door in an outward direction and adapted for extending onto an outer edge of the access opening when the aircraft door closes the access opening, and at least one intermediate part located in at least one of an inner edge region and an outer edge region of the access opening for inducing a force onto the cover plate directed away from the door frame and adapted for reducing at least one of a flutter tendency of the cover plate and amplification of noise in a hollow space between the cover plate, the door frame and the door, when the door is closed.

The aircraft door arrangement thereby is defined by an access opening in the fuselage of the aircraft, through which passengers and personnel may enter or leave the aircraft. It goes without saying that an aircraft may comprise a plurality of different access openings, which may be arranged at different locations along the aircraft fuselage. The size of the access openings as well as the shape of the contours of the access openings may vary. Hence, an aircraft may comprise a variety of different aircraft door arrangements according to the invention, which may realize different features according to the invention, without departing from the scope of protection intended.

The door frame constitutes a mechanical support for the aircraft door and receives and introduces substantially all related forces into the fuselage structure. Preferably, the door frame comprises a shape that corresponds to the shape of the access opening, while the dimensions of the door frame allow to attach the door frame on an interior surface of the fuselage in the access opening region. Hence, when the aircraft door closes the access opening, it is situated in front of the door frame when viewing onto the outer skin of the fuselage.

Several locking means and movement means may be arranged at the door frame that allow to safely lock the aircraft door in a closed position.

Further, a door seal may be arranged on an interior side of the aircraft door, which is adapted for providing a flush contact with an associated seat attached to the door frame, when the aircraft door is closed. However, the door seal may also be attached to the door frame and the seat for contacting the door seal may be located at an interior side of the aircraft door. In the locked position of the aircraft door, a hollow space is created delimited by the door frame, the aircraft door, the door seal and the cover plate.

The cover plate basically is a lining element for lining a gap at a top end of the aircraft door, thereby separating the above-mentioned hollow space from the outside. The cover plate may be made of any suitable material, such as a fiber composite material or other non-metallic or metallic materials, which allows to provide a lightweight lining element.

The at least one intermediate part is an additional part, which may provide one or two noise reduction functions based on two different working principles, which may support each other for achieving a drastic reduction of noise emanating from the cover plate and/or a fluttering tendency.

Firstly, the intermediate part may simply provide a force acting on an interior side of the cover plate, i.e. into an outward direction. Together with a pretension or simply alone, this may provide for a very precise and rigid fixation of the cover plate in a predetermined position, which clearly reduces a flutter tendency. The intermediate part is at least partially placed on an outside of the fuselage, i.e. at an outer edge region of the access opening. When the cover plate is brought into position by closing the door, its upper edge will be urged into an outward direction through the intermediate part, which will result in or increase a pretension of the cover plate.

In a second working principle, the volume of the hollow space mentioned above will be decreased through integration of the intermediate part in the hollow space. This allows to increase the Eigenfrequency (or resonance frequency), which may then be clearly separated from any Eigenfrequency (or resonance frequency) of a fluttering oscillation of the cover plate. Consequently, the tendency of a noise amplification if any fluttering oscillation occurs, will be drastically reduced.

As indicated above, both working principles may be achieved separately or in combination. A gist of the invention therefore lies in a reduction of mechanical modifications of a conventional door arrangement, which will lead to providing a simple retrofit solution for existing aircraft door arrangements and, furthermore, maintaining the advantageous mechanical characteristics of aircraft door actuation means and door locking means.

Further, it may be beneficial to design the door arrangement according to the invention such that the cover plate comprises a tension, which leads to the outer edges of the cover plate pressing against the outer surface of the fuselage. The local pressing forces preferably at least compensate any suction force acting on the outside of the cover plate, such that the edges maintain their positions on the fuselage substantially under any circumstances.

In an advantageous embodiment, at least one of the intermediate parts is a flexible dampening part, which is at least partially attached to the door frame and extending into the above-mentioned hollow space. The dampening part may be any part that is adapted for providing a slight force to an interior surface of the cover plate in a direction outwards. The dampening part may extend along a substantial space between the door frame and the cover plate and absorb forces arising through a potential, accidental or sudden flutter motion of the cover plate, while it is in a constant contact with the cover plate. Furthermore, through the use of the dampening part, which comprises a certain volume, the size of the above-mentioned hollow space enclosed between the cover plate, the door frame and a door seal is clearly reduced in size. The resonance frequency of the hollow space is clearly increased. Hence, even when a flutter tendency occurs, the noise generation or amplification in this hollow space is clearly reduced as a resonance is avoided.

In an advantageous embodiment, the dampening part comprises a compressible profile made of an elastic material. Preferably, the dampening part comprises a hollow interior space, which leads to the ability to provide a rather large volume without requiring an excessive weight. Thus, the dampening part has an excellent weight to volume ratio and may fill a rather large part of the hollow space between the cover plate, the door frame and the door seal. Suitable materials may include synthetic and natural rubber, as well as polyurethane and other elastic material having the ability to withstand the large temperature range that arises in commercial aircraft.

Still further, the dampening part may be attached to the door frame by means of at least one seal retainer. The seal retainer may be made from a sheet metal having at least one curvature or bend which receives at least a section of the dampening part for supporting its shape.

Still further, the dampening part may comprise a sealing lip in a region facing away from the door frame. The sealing lip consequently rests snugly on the interior side of the cover plate for slightly exerting a force and for sealingly limit the interior space between cover plate, door frame and door seal. According to the invention, at least one of the at least one intermediate part is a filler panel, wherein the filler panel is arranged on an outer side of the edge of the access opening and facing to the center of the access opening. The filler panel at least partially rests on an outer surface of the fuselage in an edge region of the access opening, but extends over a certain section of the access opening. Hence, the cover plate does not need to rest on an edge region of the access opening, but may instead rest on the filler panel. Consequently, the cover plate may be decreased in size, which in turn clearly raises the resonance frequency and increases the stiffness of the cover plate. Resultantly, the flutter tendency is drastically reduced. The filler panel allows to be mounted to the access opening as a retrofit solution, which does not require any further constructional changes of the door arrangement, besides installing a smaller cover plate. According to the invention, the filler panel comprises a flat portion that rests on an edge region of the access opening, wherein the thickness of the flat portion decreases in a radial outwards direction, such that a ramp-like shape is formed. During a closing motion of the aircraft door, to which the cover plate is attached, an outer edge region of the cover plate slides on the outer surface of the fuselage. Due to the use of the above-mentioned filler panel, the outer edge of the cover plate slides on the ramp-shaped flat portion to a dedicated end position, leading to a slight deflection of the outer edge of the cover plate in an outwards direction, thereby achieving or further increasing a tensioning of the cover plate. This leads to a more firmly clamping of the cover plate to the fuselage and still further reducing the fluttering tendency. At the same time, as mentioned above, the cover plate may be clearly reduced in size as the filler panel already closes a part of the above-mentioned hollow space.

It is also conceivable that the filler panel comprises at least one of a bulge, protrusion or kink at least in a top section of the filler panel in an outward direction away from the outer surface of the fuselage. Preferably, the at least one of a bulge, protrusion of kink is located in a region of the filler panel, which is covering the access opening, such that when the aircraft door is closed, the outer edge of the cover plate rests on the at least one of a bulge, protrusion or kink. This leads to a capability to clearly increasing the tensioning of the cover plate, which eliminates the necessity of a pre-tensioning of the cover plate. For conducting the motion of the aircraft door from an open to a position directly above the access opening, before the aircraft door moves down, a door lever has to be moved manually. With a pre-tensioned cover plate, this may increase the required force to move the lever. However, if said bulge, protrusion or kink will be followed by the outer edge of the cover plate, a pre-tensioning may not be necessary, such that the required door lever force may be reduced.

In a further advantageous embodiment, the filler panel comprises a top portion and two lateral portions, wherein a lateral portion facing into the motion direction of the aircraft comprises a recess, into which the outer edge of the cover plate comes to rest when the aircraft door is closed. This recess may be arranged in the flat portion having the above-mentioned variable thickness, such that the outer edge of the cover plate is sealed from the airflow passing the aircraft. Consequently, the flutter tendency is even more reduced.

Still further, the cover plate and the filler panel are designed such that when the door is closed the pressing force of the cover plate acting on the filler panel are at least equal to the expected suction forces onto the cover plate during the flight. However it is preferred that the pressing force exceeds the expected suction forces.

It goes without saying that the filler panel may comprise many different shapes that are primarily determined by the location on the aircraft. For example, the filler panel may comprise a portion that clearly extends into an outwards direction of the aircraft, i.e. facing away from the outer surface of the fuselage, such that an improved sealing may be created for the outer edge of the cover plate.

### BRIEF DESCRIPTION OF THE DRAWINGS

Further characteristics, advantages and application options of the present invention are disclosed in the following description of the exemplary embodiments in the figures.
Fig. 1 shows a sectional view of an example not according to the invention, but useful for understanding it.
Fig. 2a and Fig. 2b show an exemplary embodiment in front views and sectional views.
Fig. 3a and Fig. 3b show another exemplary embodiment in front views and sectional views.
Fig. 4a and Fig. 4b show a still further exemplary embodiment in front views and sectional views.
Fig. 5 shows a further exemplary embodiment with a shortened filler panel.
Fig. 6a to Fig. 6c show an exemplary embodiment in front views and sectional views.

### DETAILED DESCRIPTION OF EXEMPLARY EMBODIMENTS

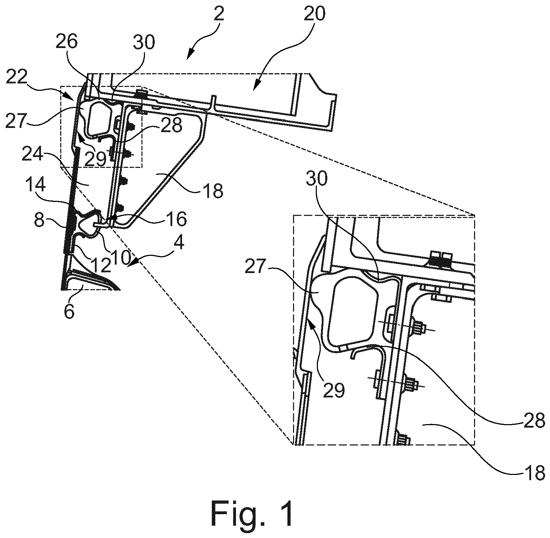

Fig. 1 shows a top section of a door arrangement 2 of an aircraft. Here, a top end 4 of an aircraft door 6 holds a cover plate 8 and a door seal 10, which is held by seal retainers 12 and 14. When the aircraft door 6 is closed, i.e. covering the access opening 22 in a fuselage structure 20, the door seal 10 is in contact with a door seal seat 16 of a door frame 18. In turn, the door frame 18 is mechanically coupled with the fuselage structure 20, follows the contour of the access opening 22 and is adapted for introducing mechanical loads from the door 6 into the fuselage structure 20.

Between the cover plate 8, the door seal 10 and an outwards facing side of the door frame 18, a hollow space 24 is created, which may act as a resonator and amplify noise emanating from a fluttering cover plate 8. For reducing the size of this hollow space 24, this example provides a dampening part 26 as an intermediate body into an edge region of the access opening 22. In this example, the dampening part 26 is comparable with the door seal 10, as it is a compressible component made of an elastic material and attached to the door frame 18 by means of seal retainers 28 and 30. The dampening part 26 comprises a sealing lip 27, which is brought into contact with an interior surface 29 of the cover plate 8.

onto an interior side of the cover plate 8 due to its compression, any excited oscillation motions of the cover plate 8 may be dampened.

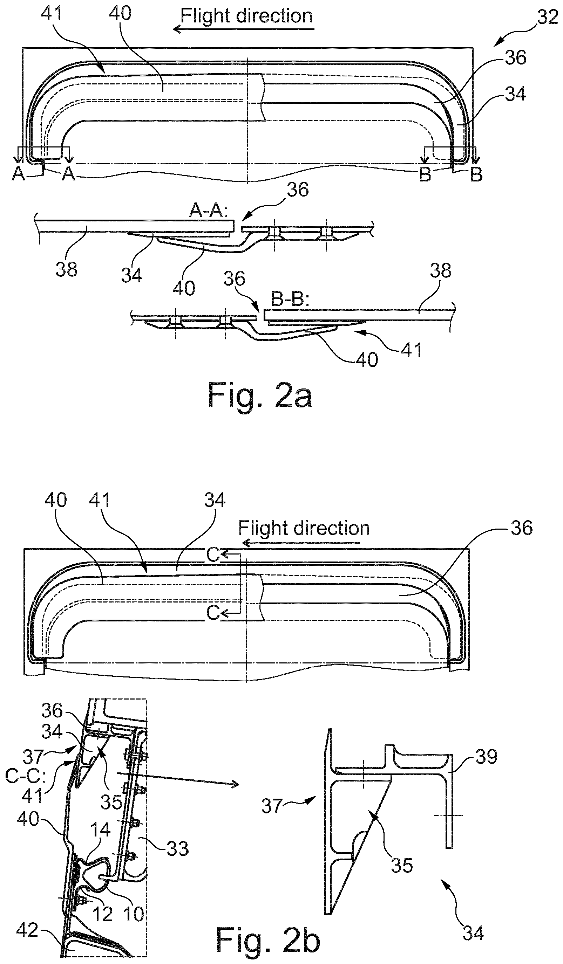

In Fig. 2a and 2b, an exemplary embodiment, which may be an addition or an alternative to the example shown in Fig. 1. Here, a front view of an upper region of a door arrangement 32 is shown, wherein the flight direction of the aircraft, to which the door arrangement 32 belongs, is indicated by an arrow.

In addition or as an alternative to the dampening part 26, a filler panel 34 is integrated to an edge region of an access opening 36 as an intermediate part, which filler panel 34 is attached to the door frame 18 visible in Fig. 2b. Fig. 2a demonstrates two lateral sections in detail with two sectional views A-A and B-B. A first lateral section, associated with sectional view A-A, faces into the flight direction, while a second lateral section, associated with sectional view B-B, faces away from the flight direction. The filler panel 34 comprises a flat portion 37 directly attached to an outer surface of a fuselage skin 38 and extending toward the interior, i.e. the center, of the access opening 36. The thickness of the flat portion 37 decreases in an outwards direction. Especially in the lateral sections of the filler panel 34, this may support the aerodynamic efficiency of the whole transition between fuselage skin 38, filler panel 34 and cover plate 40, such that a least possible vorticity is created. However, as shown in Fig. 2b, this also applies to a top region of the door arrangement 32 as indicated in a sectional view C-C. Here it is clearly visible that the filler panel 34 has a frame base 35, which has a plurality of interconnected stiffening parts, which frame base 35 extends into the interior of the access opening 36. The frame base 35 is further attached to a flange 39, which in turn is attached to the door frame 18. By extending into the interior of the access opening 36, a much shorter cover plate 40 than in conventional door arrangements may be used.

The flat portion 37 is carried by the frame base 35. When the aircraft door 42 is in the process of being closed, it will move a certain distance downwards before being locked in the door frame 18. During this downward directed motion, the cover plate 40 slides on the flat portion 37 and will increasingly be deflected into an outwards direction. Due to the deflection, it is tensioned, such that it constantly urges to the outer surface of the fuselage. The tensioning thereby depends on the thickness of the flat portion 37 and the shape of the frame base 35, i.e. the achievable distance from an outside surface of the fuselage and the upper edge of the cover plate 40.

In case the cover plate 40 is already pre-tensioned to snugly fit against the fuselage of the aircraft, this tensioning force will be further increased through the filler panel 34 and the fluttering tendency of the cover plate 40 is further reduced. Furthermore, the cover plate 40 may be reduced in size compared to conventional cover plates. The filler panel 34 provides a sliding surface for the upper edge 41 of the cover plate 40 for prohibiting that the upper edge 41 touches any seal between in an edge region of the access opening 36.

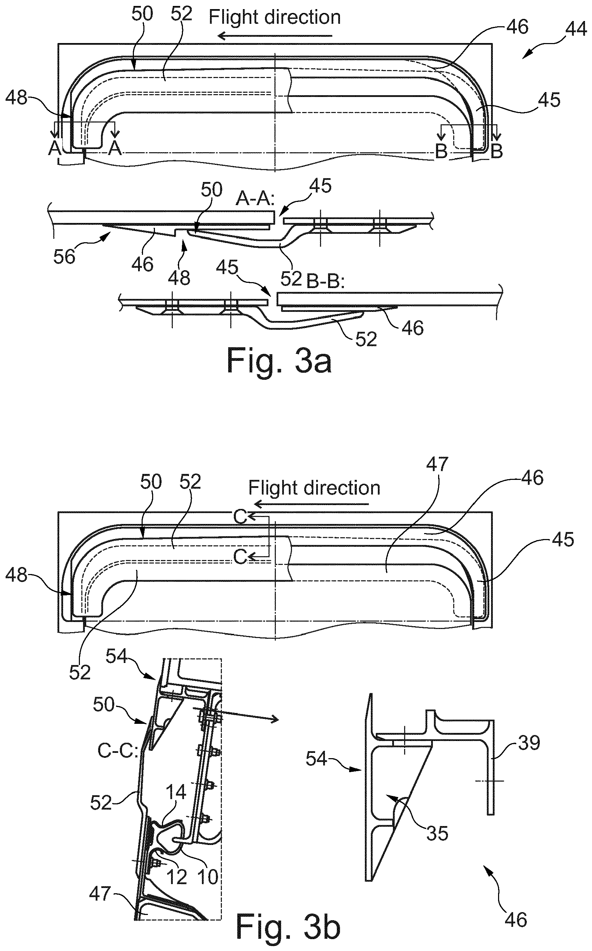

Figs. 3a and 3b show a door arrangement 44, which is based on the door arrangement of the previous Figs. 2a and 2b, but with slight modifications. Here, in section A-A, which is associated with a first lateral section of a filler panel 46 facing into the flight direction, a recess 48 is located, into which an outer edge 50 of cover plate 52 comes to rest when an aircraft door 47 is closed.

The recess 48 as well as a ramp-like outer surface 56 of the filler panel 46 in a flat portion 54 may be designed so as to provide a continuous, aerodynamically positive geometry for reducing the risk of an airflow reaching below the outer edge 50 of a cover plate 52. Hence, this ramp-like outer surface 56 in combination with recess 48 may be considered a spoiler arrangement.

As shown in Fig. 3b, a second lateral section of the filler panel 46 does not necessarily have to be shaped like the first lateral section. Here, the shape equals the shape of the filler panel 34 shown in Fig. 2a. Still further, the upper section of filler panel 46 corresponds to the design of the upper section of filler panel 34 shown in Fig. 2b.

Such a design may be beneficial in regions along the fuselage, where higher suction forces are to be expected. For example, this may be the case at doors downstream of a wing root or above a wing, where the direction of flow is heavily influenced by the flow above the wing.

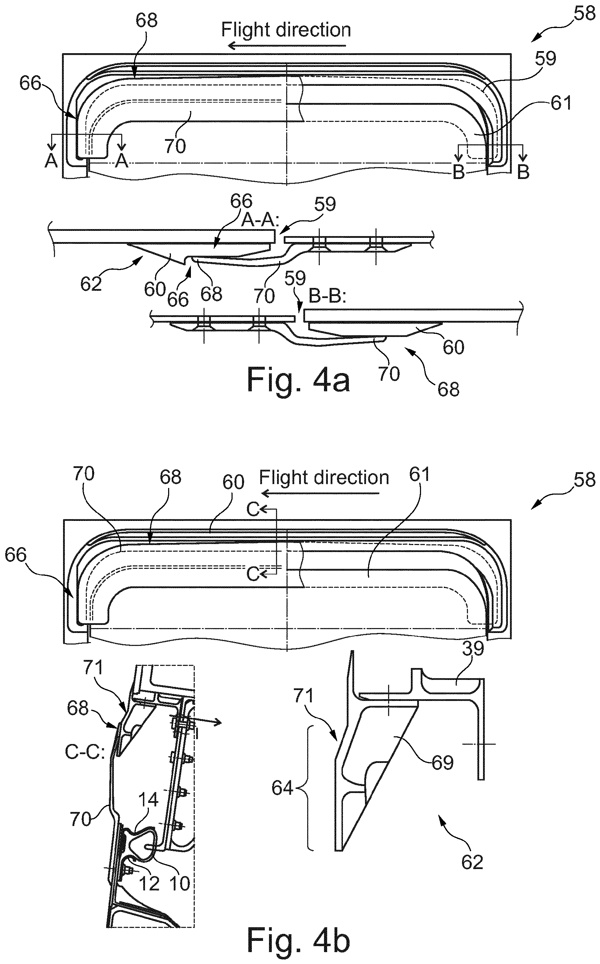

A still further advantageous embodiment is shown in Figs. 4a and 4b. Here, a door arrangement 58 is depicted, comprising a filler panel 60 having a more prominent ramp-like surface 62 compared to filler panel 46 of Fig. 3a. A lateral section of the filler panel 60 facing into the direction of flight comprises a recess 66, which is adapted for receiving an outer edge 68 of a cover plate 70. The filler panel 60 comprises a distinct thickness compared to filler panel 46 of Fig. 3a and may be twice or three times as much as of filler panel 46 or even more. Consequently, it drastically increases the tensioning force onto the cover plate 70, which in turn drastically increases the reduction of fluttering tendency.

As shown in Fig. 4b, this does not only relate to a lateral section, but also to a top section of the filler panel 60. The filler panel 60 may comprise a frame base 69, which carries or comprises a bulge 71. This may be realized in that the frame base 69 in an interior section 64 covering a part of the access opening comprises a prominent bulge 71, a protrusion or a kink directed away from the access opening, such that the distance between the outer edge of the cover plate 70 to the outer surface of the fuselage is increased.

As mentioned earlier, such a design is particularly beneficial in a region along the fuselage, where higher suction forces are to be expected, such like at doors downstream of a wing root or above a wing.

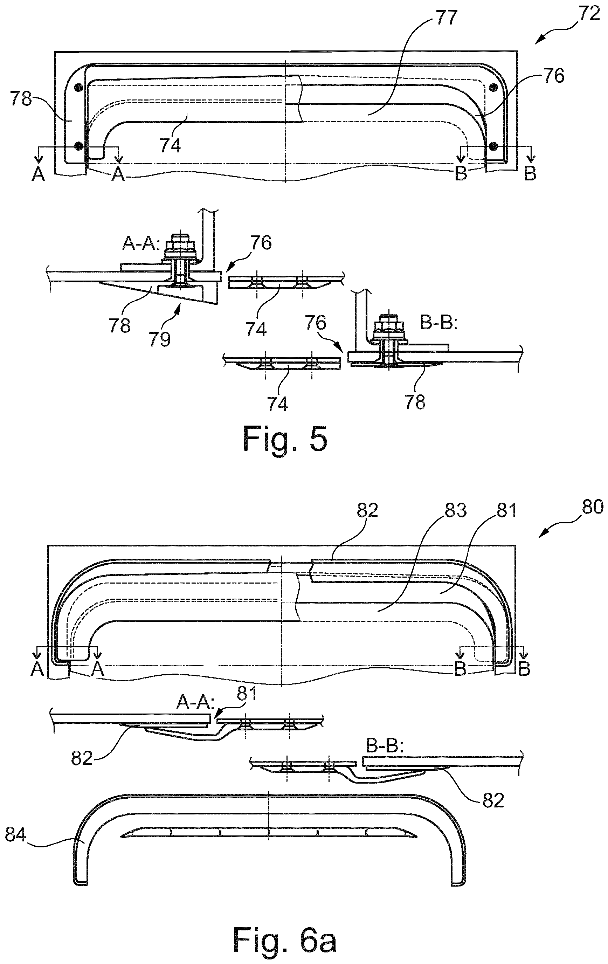

Fig. 5 shows a door arrangement 72 having a cover plate 74, which is laterally cut, i.e. not extending over lateral edges of an access opening 76. However, a filler panel 78, which is attached to a lateral region of the access opening 76. As indicated in a section A-A., which corresponds to a first lateral section of the filler panel 78 facing into the flight direction, a spoiler function may shield a lateral edge of the cover plate 74. As indicated in section B-B, this is not necessary for a second lateral section of the filler panel 78 facing away from the flight direction. Here, the filler panel 78 is rather flat.

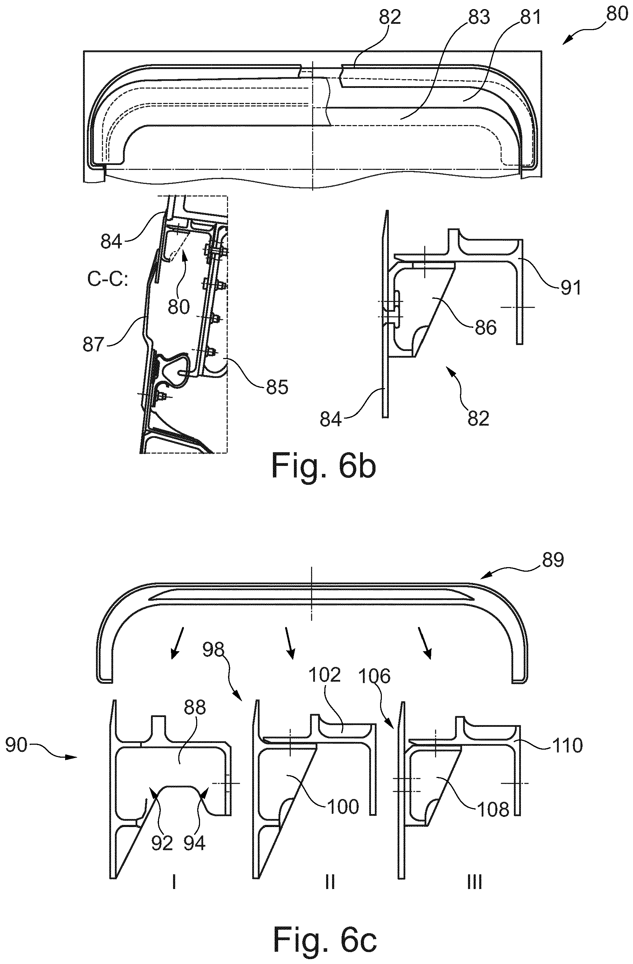

Finally, Figs. 6a to 6c show a door arrangement 80, which basically corresponds to the exemplary embodiment shown in Figs. 2a and 2b, while a filler panel 82 is designed as a combination of a flat sheet 84, which is considered a flat portion in view of the above description, a separate base frame 86 attached to the flat sheet 84 as well as a flange 91, to which the base frame 86 is attachable. A cover plate 87 rests on the flat sheet sheet 84 of the filler panel 82.

For the sake of completeness, Fig. 6c shows different approaches for filler panels 89. In section I, a filler panel 88 is shown, which is made with a casting process. Hence, it comprises a flat portion 90, a base frame 92 and a flange 94 integrally. In section II, a filler panel 96 is illustrated, which may be made through a cutting process. Here, a flat portion 98 and a base frame 100 are combined, while a flange 102 is a separate part. Still further, in section III a filler panel 104 is shown, which is a group of three single components. A flat portion 106 is made from a material sheet, such as a metal or fiber composite sheet, while a base frame 108 may be made through a cutting process, as well as a flange 110, which basically corresponds to the flange 102 in section II or the flange 39 in the above description.

The actual design or setup of the filler panel may depend on the parts variety and the total number of the filler panels to be manufactured.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

## Claims

1. Aircraft having a fuselage comprising at least one access opening (22, 36, 45, 59, 76, 81) including at least one aircraft door arrangement (2, 32, 44, 58, 72, 80), the aircraft door arrangement (2, 32, 44, 58, 72, 80) comprising:
- at least a section of a door frame (18, 33, 49, 63, 85) arranged in the access opening (22, 36, 45, 59, 76, 81),
- an aircraft door (6, 42, 47, 61, 77, 83),
- a cover plate (8, 40, 52, 70, 74, 87) extending from an outer edge of the aircraft door (6, 42, 47, 61, 77, 83) in an outward direction, and
- at least one intermediate part (26, 34, 46, 62, 78, 82) for inducing a force onto the cover plate (8, 40, 52, 70, 74, 87) directed away from the door frame (18, 33, 49, 63, 85) and adapted for reducing at least one of a flutter tendency of the cover plate (8, 40, 52, 70, 74, 87) and amplification of noise in a hollow space (24) between the cover plate, the door frame (18, 33, 49, 63, 85) and the aircraft door (6, 42, 47, 61, 77, 83), when the aircraft door (6, 42, 47, 61, 77, 83) is closed,
**characterized in that** at least one of the at least one intermediate part (26, 34, 46, 62, 78, 82) is a filler panel (34, 46, 62, 78, 82),
wherein the filler panel (34, 46, 62, 78, 82) is arranged on an outer side of the edge region of the access opening (22, 36, 45, 59, 76, 81) and facing to the center of the access opening (22, 36, 45, 59, 76, 81),
wherein the filler panel (34, 46, 62, 78, 82) comprises a flat portion (37, 54, 84, 90, 98, 106) that rests on the outer side of the edge region of the access opening (22, 36, 45, 59, 76, 81),
wherein the thickness of the flat portion (37, 54, 84, 90, 98, 106) at least in a top portion of the door arrangement (2, 32, 44, 58, 72, 80) decreases in a radial outwards direction away from the center of the access opening (22, 36, 45, 59, 76, 81), such that a ramp-like shape is formed and
wherein the cover plate (8, 40, 52, 70, 74, 87) is adapted for extending onto the filler panel (34, 46, 62, 78, 82) when the aircraft door (6, 42, 47, 61, 77, 83) closes the access opening (22, 36, 45, 59, 76, 81).

2. Aircraft of claim 1,
wherein a further one of the at least one intermediate part (26, 34, 46, 62, 78, 82) is a flexible dampening part (26), which is at least partially attached to the door frame (18, 33, 49, 63, 85) and extending into said hollow space (24).

3. Aircraft of claim 2, wherein the dampening part (26) comprises a compressible profile made of an elastic material.

4. Aircraft of claim 2 or 3,
wherein the dampening part (26) is attached to the door frame (18, 33, 49, 63, 85) by means of at least one seal retainer (28, 30).

5. Aircraft of one of claims 2 to 4,
wherein the dampening part (26) comprises a sealing lip (27) in a region facing away from the door frame (18, 33, 49, 63, 85).

6. Aircraft of any of the previous claims,
wherein the filler panel (34, 46, 62, 78, 82) comprises at least one of a bulge, protrusion or kink (71) at least on a top section of the filler panel (34, 46, 62, 78, 82) in an outward direction away from the outer surface of the fuselage.

7. Aircraft of claim 6,
wherein the at least one of a bulge, protrusion of kink (71) is located in a region of the filler panel (34, 46, 62, 78, 82), which is covering the access opening (22, 36, 45, 59, 76, 81), such that when the aircraft door (6, 42, 47, 61, 77, 83) is closed, the outer edge of the cover plate (8, 40, 52, 70, 74, 87) rests on the at least one of a bulge, protrusion or kink (71).

8. Aircraft of any of the previous claims,
wherein the filler panel (34, 46, 62, 78, 82) comprises a top portion and two lateral portions,
wherein a lateral portion facing into the motion direction of the aircraft comprises a recess (48, 66), adapted for receiving an outer edge of the cover plate (8, 40, 52, 70, 74, 87) when the aircraft door (6, 42, 47, 61, 77, 83) is closed.

9. Aircraft of any of the previous claims,
wherein the cover plate (8, 40, 52, 70, 74, 87) and the filler panel (34, 46, 62, 78, 82) are designed such that when the aircraft door (6, 42, 47, 61, 77, 83) is closed the pressing force of the cover plate (8, 40, 52, 70, 74, 87) acting on the filler panel (34, 46, 62, 78, 82) are at least equal to the expected suction forces onto the cover plate (8, 40, 52, 70, 74, 87) during flight.

## Patentansprüche

1. Flugzeug mit einem Rumpf, aufweisend mindestens eine Zugangsöffnung (22, 36, 45, 59, 76, 81) mit mindestens einer Flugzeugtüranordnung (2, 32, 44, 58, 72, 80), die Flugzeugtüranordnung (2, 32, 44, 58, 72, 80) aufweisend:
- mindestens einen Abschnitt eines Türrahmens (18, 33, 49, 63, 85), der in der Zugangsöffnung (22, 36, 45, 59, 76, 81) angeordnet ist,
- eine Flugzeugtür (6, 42, 47, 61, 77, 83),
- eine Abdeckplatte (8, 40, 52, 70, 74, 87), die sich von einer Außenkante der Flugzeugtür (6, 42, 47, 61, 77, 83) nach außen hin erstreckt, und
- mindestens ein Zwischenbauteil (26, 34, 46, 62, 78, 82) zum Einleiten einer von dem Türrahmen (18, 33, 49, 63, 85) abgewandten Kraft auf die Abdeckplatte (8, 40, 52, 70, 74, 87) und das dazu eingerichtet ist, mindestens eines einer Flattertendenz der Abdeckplatte (8, 40, 52, 70, 74, 87) und einer Lärmverstärkung in einem Hohlraum (24) zwischen der Abdeckplatte, dem Türrahmen (18, 33, 49, 63, 85) und der Flugzeugtür (6, 42, 47, 61, 77, 83) zu reduzieren, wenn die Flugzeugtür (6, 42, 47, 61, 77, 83) geschlossen ist,
**dadurch gekennzeichnet, dass** mindestens eines des Zwischenbauteils (26, 34, 46, 62, 78, 82) ein Füllpaneel (34, 46, 62, 78, 82) ist,
wobei das Füllpaneel (34, 46, 62, 78, 82) an einer Außenseite des Kantenbereichs der Zugangsöffnung (22, 36, 45, 59, 76, 81) angeordnet ist und zu der Mitte der Zugangsöffnung (22, 36, 45, 59, 76, 81) gewandt ist,
wobei das Füllpaneel (34, 46, 62, 78, 82) einen flachen Abschnitt (37, 54, 84, 90, 98, 106) aufweist, der auf der Außenseite des Kantenbereichs der Zugangsöffnung (22, 36, 45, 59, 76, 81) liegt,
wobei die Dicke des flachen Abschnitts (37, 54, 84, 90, 98, 106) mindestens in einem oberen Abschnitt der Türanordnung (2, 32, 44, 58, 72, 80) radial nach außen von der Mitte der Zugangsöffnung (22, 36, 45, 59, 76, 81) weg sinkt, so dass eine rampenartige Form ausgebildet ist, und
wobei die Abdeckplatte (8, 40, 52, 70, 74, 87) dazu ausgebildet ist, sich auf das Füllpaneel (34, 46, 62, 78, 82) zu erstrecken, wenn die Flugzeugtür (6, 42, 47, 61, 77, 83) die Zugangsöffnung (22, 36, 45, 59, 76, 81) schließt.

2. Flugzeug nach Anspruch 1,
wobei ein weiteres des mindestens einen Zwischenbauteils (26, 34, 46, 62, 78, 82) ein flexibles Dämpfungsbauteil (26) ist, welches zumindest teilweise an dem Türrahmen (18, 33, 49, 63, 85) befestigt ist und sich in den Hohlraum (24) erstreckt.

3. Flugzeug nach Anspruch 2,
wobei das Dämpfungsbauteil (26) ein kompressibles Profil aufweist, das aus einem elastischen Material hergestellt ist.

4. Flugzeug nach Anspruch 2 oder 3,
wobei das Dämpfungsbauteil (26) mittels mindestens eines Dichtungshalters an dem Türrahmen (18, 33, 49, 63, 85) befestigt ist.

5. Flugzeug nach einem der Ansprüche 2 bis 4,
wobei das Dämpfungsbauteil (26) mindestens eine Dichtlippe (27) in einem Bereich aufweist, der von dem Türrahmen (18, 33, 49, 63, 85) weggerichtet ist.

6. Flugzeug nach einem der vorhergehenden Ansprüche,
wobei das Füllpaneel (34, 46, 62, 78, 82) mindestens eines einer Auswölbung, eines Vorsprungs oder eines Knicks (71) mindestens auf einem oberen Abschnitt des Füllpaneels (34, 46, 62, 78, 82) nach außen von der äußeren Oberfläche des Flugzeugs weg gerichtet aufweist.

7. Flugzeug nach Anspruch 6,
wobei das mindestens eine einer Auswölbung, eines Vorsprungs oder eines Knicks (71) in einem Bereich des Füllpaneels (34, 46, 62, 78, 82) angeordnet ist, der die Zugangsöffnung (22, 36, 45, 59, 76, 81) abdeckt, so dass die Außenkante der Abdeckplatte (8, 40, 52, 70, 74, 87) auf dem mindestens einen einer Auswölbung, eines Vorsprungs oder eines Knicks (71) liegt, wenn die Flugzeugtür (6, 42, 47, 61, 77, 83) geschlossen ist.

8. Flugzeug nach einem der vorhergehenden Ansprüche,
wobei das Füllpaneel (34, 46, 62, 78, 82) einen oberen Abschnitt und zwei seitliche Abschnitte aufweist,
wobei ein seitlicher Abschnitt, der in die Bewegungsrichtung des Flugzeugs gewandt ist, eine Ausnehmung (48, 66) aufweist, die dazu eingerichtet ist, eine Außenkante der Abdeckplatte (8, 40, 52, 70, 74, 87) aufzunehmen, wenn die Flugzeugtür (6, 42, 47, 61, 77, 83) geschlossen ist.

9. Flugzeug nach einem der vorhergehenden Ansprüche,
wobei die Abdeckplatte (8, 40, 52, 70, 74, 87) und das Füllpaneel (34, 46, 62, 78, 82) derart ausgebildet sind, dass bei geschlossener Flugzeugtür (6, 42, 47, 61, 77, 83) die auf das Füllpaneel (34, 46, 62, 78, 82) wirkende Druckkraft der Abdeckplatte (8, 40, 52, 70, 74, 87) mindestens genauso groß ist wie die zu erwartende Saugkraft auf die Abdeckplatte (8, 40, 52, 70, 74, 87) während des Flugs.

## Revendications

1. Aéronef ayant un fuselage comprenant au moins une ouverture d'accès (22, 36, 45, 59, 76, 81) comportant au moins un agencement de porte d'aéronef (2, 32, 44, 58, 72, 80), l'agencement de porte d'aéronef (2, 32, 44, 58, 72, 80) comprenant :
- au moins une section de cadre de porte (18, 33, 49, 63, 85) disposé dans l'ouverture d'accès (22, 36, 45, 59, 76, 81),
- une porte d'aéronef (6, 42, 47, 61, 77, 83),
- une plaque de recouvrement (8, 40, 52, 70, 74, 87) s'étendant depuis un bord extérieur de la porte d'aéronef (6, 42, 47, 61, 77, 83) en direction de l'extérieur, et
- au moins une pièce intermédiaire (26, 34, 46, 62, 78, 82) destinée à induire une force sur la plaque de recouvrement (8, 40, 52, 70, 74, 87) dirigée à l'opposé du cadre de porte (18, 33, 49, 63, 85) et conçue pour réduire une tendance au flottement de la plaque de recouvrement (8, 40, 52, 70, 74, 87) et/ou une amplification du bruit dans un espace creux (24) entre la plaque de recouvrement, le cadre de porte (18, 33, 49, 63, 85) et la porte d'aéronef (6, 42, 47, 61, 77, 83), lorsque la porte d'aéronef (6, 42, 47, 61, 77, 83) est fermée,
**caractérisé en ce qu'**au moins une de l'au moins une pièce intermédiaire (26, 34, 46, 62, 78, 82) est un panneau de remplissage (34, 46, 62, 78, 82),
dans lequel le panneau de remplissage (34, 46, 62, 78, 82), est disposé sur un côté extérieur de la région de bord de l'ouverture d'accès (22, 36, 45, 59, 76, 81) et est orienté vers le centre de l'ouverture d'accès (22, 36, 45, 59, 76, 81),
dans lequel le panneau de remplissage (34, 46, 62, 78, 82) comprend une partie plate (37, 54, 84, 90, 98, 106) qui repose sur le côté extérieur de la région de bord de l'ouverture d'accès (22, 36, 45, 59, 76, 81),
dans lequel l'épaisseur de la partie plate (37, 54, 84, 90, 98, 106) au moins en une partie supérieure de l'agencement de porte (2, 32, 44, 58, 72, 80) diminue dans une direction extérieure radiale opposée au centre de l'ouverture d'accès (22, 36, 45, 59, 76, 81), de manière à former une forme de rampe, et
dans lequel la plaque de recouvrement (8, 40, 52, 70, 74, 87) est conçue pour s'étendre sur le panneau de remplissage (34, 46, 62, 78, 82) lorsque la porte d'aéronef (6, 42, 47, 61, 77, 83) ferme l'ouverture d'accès (22, 36, 45, 59, 76, 81).

2. Aéronef selon la revendication 1,
dans lequel une autre de l'au moins une pièce intermédiaire (26, 34, 46, 62, 78, 82) est une pièce flexible d'amortissement (26) qui est fixée au moins en partie au cadre de porte (18, 33, 49, 63, 85) et s'étendant dans ledit espace creux (24).

3. Aéronef selon la revendication 2,
dans lequel la pièce d'amortissement (26) comprend un profilé compressible constitué d'un matériau élastique.

4. Aéronef selon la revendication 2 ou 3,
dans lequel la pièce d'amortissement (26) est fixée au cadre de porte (18, 33, 49, 63, 85) au moyen d'au moins un dispositif de retenue de joint (28, 30).

5. Aéronef selon l'une des revendications 2 à 4,
dans lequel la pièce d'amortissement (26) comprend une lèvre d'étanchéité (27) dans une région orientée à l'opposé du cadre de porte (18, 33, 49, 63, 85).

6. Aéronef selon l'une quelconque des revendications précédentes,
dans lequel le panneau de remplissage (34, 46, 62, 78, 82) comprend un renflement et/ou une saillie et/ou un pli (71) au moins sur une partie supérieure du panneau de remplissage (34, 46, 62, 78, 82) dans une direction extérieure à l'opposé de la surface extérieure du fuselage.

7. Aéronef selon la revendication 6,
dans lequel le renflement et/ou la saillie et/ou le pli (71) se situe(nt) dans une région du panneau de remplissage (34, 46, 62, 78, 82) qui recouvre l'accès d'ouverture (22, 36, 45, 59, 76, 81), de manière que lorsque la porte d'aéronef (6, 42, 47, 61, 77, 83) est fermée, le bord extérieur de la plaque de recouvrement (8, 40, 52, 70, 74, 87) repose sur le renflement et/ou la saillie et/ou le pli (71).

8. Aéronef selon l'une quelconque des revendications précédentes,
dans lequel le panneau de remplissage (34, 46, 62, 78, 82) comprend une partie supérieure et deux parties latérales,
dans lequel une partie latérale orientée dans la direction de déplacement de l'aéronef comprend un évidement (48, 66) conçu pour recevoir un bord extérieur de la plaque de recouvrement (8, 40, 52, 70, 74, 87) lorsque la porte d'aéronef (6, 42, 47, 61, 77, 83) est fermée.

9. Aéronef selon l'une quelconque des revendications précédentes,
dans lequel la plaque de recouvrement (8, 40, 52, 70, 74, 87) et le panneau de remplissage (34, 46, 62, 78, 82) sont conçus de manière que lorsque la porte d'aéronef (6, 42, 47, 61, 77, 83) est fermée, la force de pression de la plaque de recouvrement (8, 40, 52, 70, 74, 87) agissant sur le panneau de remplissage (34, 46, 62, 78, 82) est au moins égale aux forces d'aspiration prévues sur la plaque de recouvrement (8, 40, 52, 70, 74, 87) en cours de vol.
